# EUROPEAN PATENT SPECIFICATION

(11) **EP 0 544 972 B1**
(45) Date of publication and mention of the grant of the patent: **20.03.1996**
(21) Application number: 91830533.5
(22) Date of filing: 04.12.1991
(51) Int. Cl.: B65G 57/18

(54) **Bar layers with overturning preparation system for packing plants**
Vorbereitungssystem mit Umkantung von Profilstabschichten für Verpackungsanlagen
Système de préparation avec retournement de couches de barres pour installations d'emballage

(43) Date of publication of application: 09.06.1993
(73) Proprietor: ASPE S.r.l., I-33030 Campoformido (UD) (IT)
(72) Inventor: Moscattini, Federico, I-33030 Campoformido (UD) (IT)
(74) Representative: D'Agostini, Giovanni, Dr.

(56) References cited:
- EP-A- 0 353 811
- DE-B- 1 235 811
- PATENT ABSTRACTS OF JAPAN vol. 11, no. 210 (M-604)(2657) 8 July 1987

## Description

The object of the present invention is a bar layers preparation system for packing plants.

Existing bar layers preparation systems are known for packing plants where the overturning is also necessary.

When the overturning is necessary, as for example in the case of the packing of angle bars with L-shaped section from a crosswise line of bar advancement, joined bar layers of "n" and "n-1" bars are formed in an alternating way, and the upstream layer of "n-1" bars is picked-up through magnetic means, overturned and at the same time brought forward over the layer of downstream "n" bars.(see:
- Patent Abstract of Japan Vol.11 no.210 (M-604)(2657) 8 July 1987 & JP-A-62027231 (TAKIGAWA KOGYO) 5 February 1987;
- EP-A-0353811 (CASAGRANDE) (preamble of claims 1 and 7);
- DE-B-1 235 811 (MOELLER) )
A kind of linkage is thus obtained, i.e. the lower layer of "n" bars with its bars substantially in the shape of an overturned "V" and over the overturned layer with its bars between the depressions of the first, i.e. placed according to a "V"-shaped arrangement.

Once this double layer has been made, it is transferred to a packing pocket always through magnetic means, and the cycle is repeated.

This technique, which is at present the most advanced, has the drawback that the transfer of the double bar layer need necessarily await the completion of the first transfer, as well as the overturning of the upstream bar layer of "n-1" bars on the downstream layer, and it need also await that the magnetic means move from said position and return to the starting position before transferring the successive layers.

This causes the transfer of the double layer to wait, which limits the possibility of increasing the plant speed.

The object of the present invention is to obviate the above-mentioned drawbacks.

This and other objects are reached as claimed by means of a bar layers preparation method as claimed in claim 1.

In this way, through such unthought-of and original creative contribution, the effect of which provides an immediate and sensible technical progress, the time of wait for the transfer (layers "n-1" and "n" being previously arranged) of the double layer second transfer phase towards the packing pocket is eliminated, since during the formation of the double layer through overturning of the downstream layer ( n-1 ) on the upstream layer ( n ) and successive transfer to the packing pocket, the formation of the layers "n-1" and "n" on the front latches can freely take place, as well as the translation of the same to the respective positions now let free of formation of the double layer by the aforesaid transfer, thus avoiding time losses.

More specifically the method is of the kind utilizing a plant as claimed in claim 7.

Advantageously, said bar layer pick-up means are electromagnets means, or mechanical or hydraulic pliers.

In this way all the operations are synchronized without long waits. This way of packing can be carried out also by means of a mechanical or hydraulic system, such as lances, pliers, or similar solutions.

These and other advantages will appear from the following description of preferential solutions of embodiment, with the aid of the included pick-ups of which the execution details are not to be considered as limitative but only as examples.

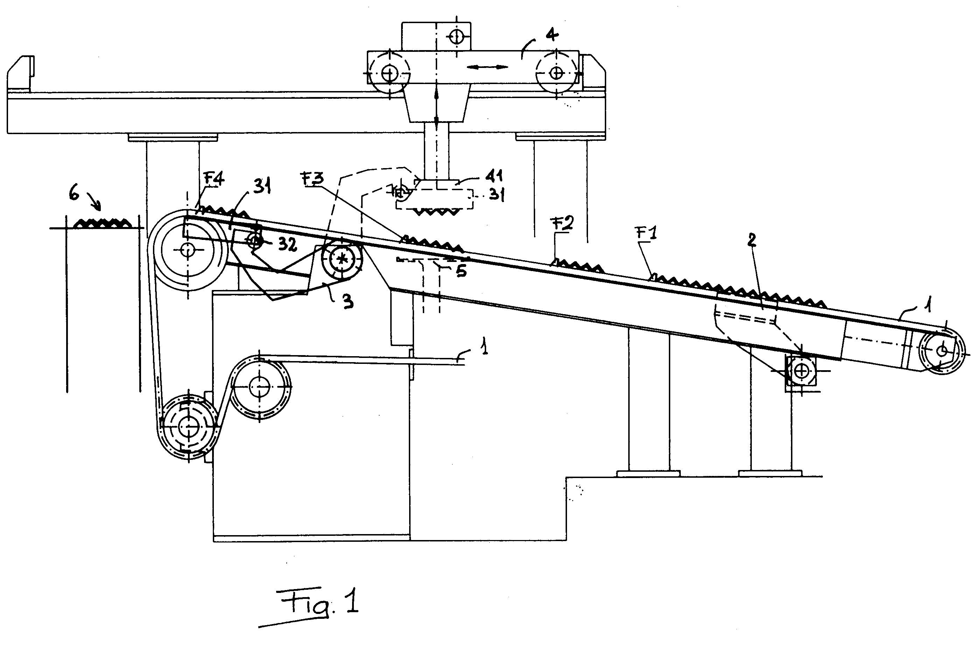

Figure 1 is a schematic side view of the transfer plant for the packing, according to the present invention.

As claimed, the bar layer transfer and packing plant is of the kind having a first overturning transfer (3) with spaced electromagnets (31), and with pivotal arm below the advancement conveyor line, and which turn over until they overturn the bar layer, associated to a second transfer from above (4) of the kind with hanging electromagnets also spaced (41) to pick-up and transfer said double bar layer to said packing pocket (6), where said electromagnets (31) of said first transfer (3) are offset compared to said electromagnets (41) of said second transfer (4), so that said electromagnets (31,41) of said two transfers (3,4) can intercross comb-like with crossed movements.

With reference to the figure, it appears that the bars are caused to advance transversely on an endless conveyor 1.
- a first latch (F1) forces the advancing bars to heap, the one close to the other.
- movable electromagnetic means (or equivalent others) below (2) block a portion of the layer heaped upstream, and said first latch (F1) goes down, letting a first bar layer of number "n-1" advance, then repeating number "n", then "n-1" and so on.
- a second latch (F2) stops the awaiting layer in front of the double layer formation station defined by a third lowerable latch (F3).
- below this third latch (F3) there is a bar layer lifter (5), and the electromagnetic means (31 as indicated in the figure by the hatching) turn over the latter with a bar layer picked-up from below downstream in correspondence with a fourth latch (F4).
- in the meantime said electromagnetic means of said second bridge crane transfer (4-41) have already moved to the same position.

So that:
- after said electromagnetic means (31) of said first transfer (3), have moved downwstream below the downstream advancement conveyor line (F4),
- said electromagnetic means (41) of said second transfer (4), can move said double layer freely and without waiting from the station (F3) to the packing pocket (6).

Advantageously, said layer litter (5) raises the layer stopped by the latch (F3) under the overturned layer attached to said electromagnets (31), and then said electromagnets of said second transfer (4) intervene downstream from above in order to pick-up the double layer from the underlying raised support (5), after said first transfer (31-3) has risen and has begun to rotate upstream, or the support (5) rises again without lowering of the magnets (41).

As an alternative solution, the rotating arms of said first transfer can be replaced by articulated movement systems, as for example with fulcrum on a rotating or translating pivotal arm below the advancement conveyor line.

## Claims

1. Bar layers preparation method for packing plants, starting from bar layers which are caused to advance transversely in alternating number "n-1" and "n", of the kind utilizing:
• a first overturning transfer system transfering one bar layer onto the other (3-31-32) above the advancement conveyor line (1) to form a double bar layer, the one upright and the other inverted, in association with:
• a second transfer system (4-41) also acting from above the advancement conveyor line, to transfer said two superposed bar layers to a packing pocket (6), characterized in that the formation of said double bar layer is carried out by picking-up one downstream bar layer ( F4 ) to carry it in an inverted position over the upstream layer (F3).

2. Method according to claim 1, characterized in that said first overturning transfer system (3-31-32), after having formed said double bar layer, moves
• downstream from the position of double bar layer station formation and
• below the bar layer advancement conveyor line (1).

3. Method according to the previous claims, of the kind utilizing a plant having:
- a first overturning transfer (3) with spaced and rotating over themselves bar layers pick-up means (31), moving
- from above
- to below the advancement conveyor line (1), associated with
- a second transfer acting from above (4) of the kind with bar layer pick-up means moving over the advancement conveyor line, also spaced (41), to pick-up and transfer said double bar layer to said packing pocket (6), characterized in that
• said bar layer pick-up means (31) of said first transfer (3) are offset compared to said bar layer pick-up means (41) of said second transfer (4), so that said bar layer pick-up means (31,41) of said two transfers (3,4) can intercross comb-like with crossed movements, and in which the operating system of said transfers (3,4) works as follows:
- said first transfer (3) picks-up one bar layer (F4) downstream and moves it countercurrent by turning it over said upstream layer (F3), while said second transfer (4) is moved downstream to deposit in said pocket the previously made double bar layer (6);
- the overlap of said two bar layers being made, said two bar layer pick-up means (31) of said first transfer (3) are surpassed with upstream movement by said bar layer pick-up means (41) of said second transfer (4) which picks-up said just made double layer, while said bar layer pick-up means (31) of said first transfer (3) moves again downstream and below the advancement conveyor line (F4), preceding the second (41) which will transport said double layer downstream to said packing pocket (6), in order to repeat the cycle.

4. Method according to claim 2, characterized in that it utilizes in said double layer formation zone (F3) a bar layer lifter (5).

5. Method according to claim 3, characterized in that said bar layer lifter (5) raises the bar layer stopped by the latch (F3) below the overturned bar layer attached to said bar layer pick-up means (31), and then said bar layer pick-up means (41) of said second transfer (4) intervene from above downstream, in order to pick-up said double bar layer from the raised support below (5), after said first transfer (31-3) has risen and has begun to rotate upstream.

6. Method according to claim 3, characterized in that said bar layer lifter (5) acts as an intermediate transfer means to said second transfer (4-41), in double action, both from said first transfer (3-31) and from said carrier (1).

7. Bars transfer and packing plant, having
- a first overturning transfer (3) with spaced and rotating over themselves bar layer pick-up means (31), moving
- from above
- to below the advancement conveyor line, associated with
- a second transfer acting from above (4) of the kind with also spaced bar layer pick-up means moving above the advancement conveyor line (41), in order to pick-up and transfer said double bar layer to said packing pocket (6), characterized in that said bar layer pick-up means (31) of said first transfer (3), are offset compared to said bar layer pick-up means (41) of said second transfer (4), so that said bar layer pick-up means (31,41) of said two transfers (3,4) can intercross comb-like with crossed movements, and in which the operating system of said transfers (3,4) works according to the method whereof at the previous claims.

8. Bars transfer and packing plant according to claim 7, characterized in that said bar layer pick-up means are electromagnetic means.

9. Bar transfer and packing plant according to claim 7, characterized in that said first transfer is of the kind involving a series of spaced and rotatable bar layer pick-up means (31-32).

10. Bar transfer and packing plant according to claim 9, characterized in that said bar layer pick-up means of said first transfer (3) are moved by a pivotal rotating arm below the advancement conveyor line (1).

11. Bar transfer and packing plant according to claim 9, characterized in that said bar layer pick-up means (31-32) of said first transfer (3) are moved by:
• means moving said bar layer pick-up means from below to above the advancement conveyor line (1) and viceversa, and
• means moving said bar layer pick-up means along the advancement conveyor line.

## Patentansprüche

1. Methode zur Herrichtung von Stabschichten für Packanlagen, ausgehend von Stabschichten, die abwechselnd "n-1" und "n" quer vorwärtsbewegt werden, mit:
• einem ersten Umkipp-Transfersystem, das eine Stabschicht auf die andere oberhalb des Förderbands (1) legt (3-31-32), so daß eine doppelte Stabschicht entsteht, eine aufrecht und die andere umgekehrt, in Verbindung mit:
• einem zweiten Transfersystem (4-41), das auch von oberhalb des Förderbands wirkt, zum Transport der besagten übereinanderliegenden Stabschichten zu einer Packtasche (6),
gekennzeichnet dadurch, daß die Bildung der doppelten Stabschicht geschieht, indem eine nachgeschaltete Stabschicht (F4) aufgenommen und in umgekehrter Lage über die vorgeschaltete Stabschicht (F3) gebracht wird.

2. Methode nach Anspruch 1, gekennzeichnet dadurch, daß das erste Umkipp-Transfersystem (3-31-32) sich nach der Bildung der doppelten Stabschicht
• flußabwärts von dem Ort der Bildung der doppelten Stabschicht und
• unter das Stabschicht-Förderbands (1) bewegt.

3. Methode nach den vorherigen Ansprüchen, mit einer Anlage mit:
- einem ersten Umkipp-Transfer (3) mit distanzierten und übereinander rotierenden Stabschicht-Aufnahmemitteln (31), die sich
- von oben
- unter das Förderband (1) bewegen, mit
- einem zweiten Transfersystem, das von oben wirkt (4), mit Stabschicht-Aufnahmemitteln, die sich über dem Förderband bewegen, ebenfalls distanziert (41), um die doppelte Stabschicht aufzunehmen und zu der Packtasche (6) zu befördern,
gekennzeichnet dadurch, daß
• die Stabschicht-Aufnahmemittel (31) des ersten Transfers (3) versetzt zu den Stabschicht-Aufnahmemitteln (41) des zweiten Transfers (4) liegen, so daß die Stabschicht-Aufnahmemittel (31/41) der beiden Transfers (3/4) sich mit kreuzenden Bewegungen kammartig überkreuzen können, und bei der die Transfers (3/4) wie folgt arbeiten:
- der erste Transfer (3) nimmt eine Stabschicht (F4) flußabwärts auf und befördert sie gegen den Strom, indem er sie über die vorgeschaltete Stabschicht (F3) wendet, während der zweite Transfer (4) sich flußabwärts bewegt, um die zuvor angefertigte doppelte Stabschicht in der genannten Tasche abzulegen (6); nach der Übereinanderlegung der beiden Stabschichten werden die beiden Stabschicht-Aufnahmemittel (31) des ersten Transfers (3) durch Flußabwärtsbewegung von den Stabschicht-Aufnahmemitteln (41) des zweiten Transfers (4) überholt, der die gerade angefertigte doppelte Stabschicht aufnimmt, während das [sic] Stabschicht-Aufnahmemittel (31) des ersten Transfers (3) sich wieder flußabwärts und unter das Stabschicht-Förderband bewegt (F4), vor dem zweiten (41), das die Doppelschicht flußabwärts zu der Packtasche (6) befördert, um den Zyklus zu wiederholen.

4. Methode nach Anspruch 2, gekennzeichnet dadurch, daß sie in der Doppelschichtbildungszone (F3) einen Stabschichtheber (F5) verwendet.

5. Methode nach Anspruch 3, gekennzeichnet dadurch, daß der Stabschichtheber (F5) die durch den Riegel (F3) aufgehaltene Stabschicht unter die umgewendete Stabschicht, die an dem Stabschicht-Aufnahmemittel (31) hängt, hebt, worauf die genannten Stabschicht-Aufnahmemittel (41) des zweiten Transfers (4) von oben flußabwärts eingreifen, um die doppelte Stabschicht von der erhöhten Stütze darunter (5) aufzunehmen, nachdem der erste Transfer (31-3) sich gehoben hat und begonnen hat, flußaufwärts zu rotieren.

6. Methode nach Anspruch 3, gekennzeichnet dadurch, daß der Stabschichtheber (F5) als Zwischentransfer zu dem zweiten Transfer (41-4) wirkt, mit doppelter Wirkung, sowohl vom ersten Transfer (31-3) als auch vom Förderband (1) aus.

7. Stabtransfer- und -packanlage, mit:
- einem ersten Umkipp-Transfer (3) mit distanzierten und übereinander rotierenden Stabschicht-Aufnahmemitteln (31), die sich
- von oben
- unter das Förderband (1) bewegen, mit
- einem zweiten Transfersystem, das von oben wirkt (4), mit ebenfalls distanzierten Stabschicht-Aufnahmemitteln, die sich über dem Förderband bewegen (41), um die doppelte Stabschicht aufzunehmen und zu der Packtasche (6) zu befördern,
gekennzeichnet dadurch, daß die Stabschicht-Aufnahmemittel (31) des ersten Transfers (3) versetzt zu den Stabschicht-Aufnahmemitteln (41) des zweiten Transfers (4) liegen, so daß die Stabschicht-Aufnahmemittel (31/41) der beiden Transfers (3/4) sich mit kreuzenden Bewegungen kammartig überkreuzen können, und bei der die Transfers (3/4) nach der Methode der vorherigen Ansprüche arbeiten.

8. Stabtransfer- und -packanlage nach Anspruch 7, gekennzeichnet dadurch, daß die Stabschichtaufnehmer elektromagnetisch sind.

9. Stabtransfer- und -packanlage nach Anspruch 7, gekennzeichnet dadurch, daß der erste Transfer mit einer Reihe von distanzierten und übereinander rotierenden Stabschicht-Aufnahmemitteln (31-32) ausgestatet ist.

10. Stabtransfer- und -packanlage nach Anspruch 9, gekennzeichnet dadurch, daß die Stabschichtaufnehmer des ersten Transfers (3) durch einen um eine Drehpunkt rotierenden Dreharm unterhalb des Förderbands (1) bewegt werden.

11. Stabtransfer- und -packanlage nach Anspruch 9, gekennzeichnet dadurch, daß die Stabschichtaufnehmer (31-32) des ersten Transfers (3) bewegt werden durch:
• Mittel, die die Stabschichtaufnehmer von unten über das Förderband (1) und zurück bewegen, und
• Mittel, die die Stabschichtaufnehmer entlang des Förderbands bewegen.

## Revendications

1. Méthode de préparation de couches de barres pour équipements d'emballage, à partir de couches de barres qui sont fait avancer transversalement en numéro alterné "n-1" et "n", du genre utilisant:
• un premier système de transfert et de renversement transférant une couche de barres sur l'autre (3-31-32) au-dessus de la ligne du convoyeur d'avancement (1) pour former une double couche de barres, l'une étant droite et l'autre renversée, en association avec:
• un deuxième système de transfert (4-41) agissant lui aussi au-dessus de la ligne du convoyeur d'avancement, pour transférer lesdites deux couches de barres superposées dans une poche d'emballage (6),
caractérisé par le fait que la formation de ladite double couche de barres est réalisée en prenant une couche de barres en aval (F4) et en portant celle-ci dans une position renversée au-dessus de la couche en amont (F3).

2. Méthode selon la revendication 1, caractérisée par le fait que ledit premier système de transfert et renversement (3-31-32), après avoir formé ladite double couche de barres, se déplace
• en aval de la position de formation des doubles couches de barres et
• au-dessous la ligne du convoyeur d'avancement des couches de barres (1).

3. Méthode selon les revendications précédentes, du genre utilisant un équipement ayant:
- un premier transfert renversant (3) avec des moyens de ramassage des couches de barres espacés et tournant sur eux-mêmes (31), se déplaçant
- d'en haut
- jusq'au-dessous de la ligne du convoyeur d'avancement (1), associé avec
- un deuxième transfert agissant d'en haut (4) du genre ayant des moyens de ramassage des couches de barres qui se déplacent au-dessus de la ligne du convoyeur d'avancement, et qui sont eux-aussi espacés (41), pour ramasser et transférer ladite double couche de barres dans ladite poche d'emballage (6), caractérisé par le fait que
• lesdits moyens de ramassage des couches de barres (31) dudit premier transfert (3) sont décalés par rapport aux dits moyens de ramassage des couches de barres (41) dudit deuxième transfert (4), de façon que lesdits moyens de ramassage des couches de barres (31,41) desdits deux transferts (3,4) peuvent s'entrecroiser comme des peignoirs avec des mouvements croisés, et où le système opérationnel desdits transferts (3,4) fonctionne comme suit:
- ledit premier transfert (3) cueille une couche de barres (F4) en aval et la déplace en contre-courant en la tournant au-dessus de ladite couche en amont (F3), tandis que ledit deuxième transfert (4) est déplacé en aval pour déposer dans ladite poche la double couche de barres précédemment réalisée (6);
- Une fois que la superposition desdites deux couches de barres a été réalisée, lesdits moyens de ramassage des couches de barres (31) dudit premier transfert (3) sont surpassés avec un mouvement en amont par ledit moyen de ramassage des couches de barres (41) dudit deuxième transfert (4) qui cueille ladite double couche qui vient d'être réalisée, tandis que ledit moyen de ramassage des couches de barres (31) dudit premier transfert (3) se déplace à nouveau en aval et sous la ligne du convoyeur d'avancement (F4), en précédant le deuxième (41) qui transportera ladite double couche en aval jusqu'à ladite poche d'emballage (6), afin de répéter le cycle.

4. Méthode selon la revendication 2, caractérisée par le fait qu'elle utilise dans ladite zone de formation des doubles couches (F3) un élévateur des couches de barres (5).

5. Méthode selon la revendication 3, caractérisée par le fait que ledit élévateur des couches de barres (5) soulève la couche de barres arrêtée par le loquet (F3) au-dessous de la couche de barres renversée attachée audit moyen de ramassage des couches de barres (31), et ensuite ledit moyen de ramassage des couches de barres (41) dudit deuxième transfert (4) intervient d'en haut vers le bas, afin de ramasser ladite double couche de barres du support soulevé au-dessous d'elle (5), après que ledit premier transfert (31-3) s'est soulevé et a commencé à tourner en amont.

6. Méthode selon la revendication 3, caractérisée par le fait que ledit élévateur des couches de barres (5) agit comme un moyen de transfert intermédiaire par rapport au deuxième transfert (4-41), en action double, tant dudit premier transfert (3-31) que dudit transporteur (1).

7. Équipement pour le transfert et l'emballage des barres, comprenant
- un premier transfert renversant (3) avec des moyens de ramassage des couches de barres espacés et tournant sur eux-mêmes (31), se déplaçant
- d'en haut
- jusq'au-dessous de la ligne du convoyeur d'avancement, associé avec
- un deuxième transfert agissant d'en haut (4) du genre ayant également des moyens de ramassage des couches de barres espacés et se déplaçant au-dessus de la ligne du convoyeur d'avancement (41), afin de ramasser et de transférer ladite double couche de barres dans ladite poche d'emballage (6), caractérisé par le fait que lesdits moyens de ramassage des couches de barres (31) dudit premier transfert (3), sont décalés par rapport auxdits moyens de ramassage des couches de barres (41) dudit deuxième transfert(4), de façon que lesdits moyens de ramassage des couches de barres (31,41) desdits deux transferts (3,4) peuvent s'entrecroiser comme des peignoirs avec des mouvements croisés, et où le système opérationnel desdits transferts (3,4) fonctionne selon la méthode exposée dans les revendications précédentes.

8. Équipement pour le transfert et l'emballage des barres selon la revendication 7, caractérisé par le fait que lesdits moyens de ramassage des couches de barres sont des moyens électromagnétiques.

9. Équipement pour le transfert et l'emballage des barres selon la revendication 7, caractérisé par le fait que ledit premier transfert est du genre comprenant une série de moyens de ramassage des couches de barres espacés et tournants (31-32).

10. Équipement pour le transfert et l'emballage des barres selon la revendication 9, caractérisé par le fait que lesdits moyens de ramassage des couches de barres dudit premier transfert (3) sont déplacés par un bras pivot tournant au-dessous de la ligne du convoyeur d'avancement (1).

11. Équipement pour le transfert et l'emballage des barres selon la revendication 9, caractérisé par le fait que lesdits moyens de ramassage des couches de barres (31-32) dudit premier transfert (3) sont déplacés par:
• des moyens déplaçant lesdits moyens de ramassage des couches de barres du dessous jusqu'au-dessus de la ligne du convoyeur d'avancement.
